**Europäisches Patentamt**

**European Patent Office**

**Office européen des brevets**

(19)

(11) Veröffentlichungsnummer: **0 029 573**
**A2**

(12) **EUROPÄISCHE PATENTANMELDUNG**

(21) Anmeldenummer: **80107140.8**

(22) Anmeldetag: **18.11.80**

(51) Int. Cl.³: **F 28 D 21/00**
**F 24 F 7/08, F 24 F 3/14**

(30) Priorität: **24.11.79 DE 2947432**
**12.08.80 DE 3030415**

(43) Veröffentlichungstag der Anmeldung:
**03.06.81 Patentblatt 81/22**

(84) Benannte Vertragsstaaten:
**AT BE CH FR GB IT LI LU NL SE**

(71) Anmelder: **Klix, Uwe**
**Eisenbahnstrasse 16**
**D-7210 Rottweil(DE)**

(72) Erfinder: **Klix, Uwe**
**Eisenbahnstrasse 16**
**D-7210 Rottweil(DE)**

(74) Vertreter: **Thoma, Friedrich Xaver**
**Leimengrubweg 12**
**D-7612 Haslach i.k.(DE)**

(54) **Wärmetauscher, deren Ausbildung und Anordnung in einer Einrichtung zur Wärmerückgewinnung durch Luftaustausch, insbesondere für Wohnhäuser und vergleichbare Anlagen.**

(57) Bei diesen Wärmetauschern (1) mit feststehenden Austauschflächen, in einer Einrichtung zur Wärmerückgewinnung durch Luftaustausch, insbesondere der zur Zuluft in der Temperatur höheren und in entgegengesetzter Richtung strömenden Fortluft, sind diese beiden Luftmassenströme von einer Vielzahl einander benachbarter und in Richtung der Luftmassenströme verlaufender, wärmedurchlässiger Flächenelemente voneinander getrennt, die aus Blechen, Folie, Profilteilen, Spritzteilen oder Sinterteilen, teils aus metallischen oder teils keramischen Werkstoffen oder aus Kunststoff hergestellt sind, und die mäander-, sägezahn-oder spiralartig endlich oder endlos geformt sind und den Luftmassenströmen eine größtmögliche Oberfläche gegenüberstellen, zur Erzielung eines hohen Wärmerückgewinnungsgrades. Durch eine düsenartige Verengung der Luftschleusen (3 und 4) in Richtung der Luftmassenströme wird ein Höchstmaß an Wirkungsgrad erzielt.

Diesen Wärmetauschern (1), die sowohl unmittelbar in entsprechende Geräte oder in die Wände (16) von Wohnhäusern und vergleichbaren Anlagen eingebaut werden können, können zur Steuerung der Luftmassenströme in den Luftschleusen (3 und 4) Ventilatoren (17) und/oder zusätzliche Luftschleusen (19, 20), sogenannte Bypässe, zugeordnet werden, die über Steuerklappen (21) stufenlos regelbar zu- bzw. abschaltbar sind.

Fig.13

Wärmetauscher, deren Ausbildung und Anordnung in einer Einrichtung
zur Wärmerückgewinnung durch Luftaustausch, insbesondere für Wohnhäuser und vergleichbare Anlagen.

Die Erfindung bezieht sich auf Wärmetauscher mit festen Austauschflächen zur Übertragung sensibler Wärme, sowie deren Ausbildung
und Anordnung in Einrichtungen mit einer Zuluft- und einer Fortluftschleuse, zwischen denen solche Wärmetauscher angeordnet sein
können, zur größtmöglichen Wärmerückgewinnung der zur Zuluft in
der Temperatur höheren und in entgegengesetzter Richtungen strömenden Fortluft, insbesondere für den Einsatz in Wohnhäusern und vergleichbaren Anlagen.

Die bekannten derartigen Wärmetauscher, sowie deren Ausbildung und
Anordnung in einer Einrichtung zur Wärmerückgewinnung, die den
höchstmöglichen Wärmerückgewinnungsgrad aufweisen, benutzen das
sogenannte Gegenstromverfahren oder das, im Wärmerückgewinnungsgrad etwas niedrigere, sogenannte Kreuzstromverfahren. Bei beiden
Verfahren werden die beiden Luftmassenströme, der Zuluft- und der
Fortluftstrom, durch eine feste Wand voneinander getrennt, durch
die die Wärmeübertragung erfolgt.

Die bekannten Einrichtungen, die diese beiden Verfahren anwenden,
sind jedoch hinsichtlich ihrer Ausbildung und Anordnung zum Einsatz in Wohnhäusern und vergleichbaren Anlagen  teils nicht nur
ungeeignet, sondern in den vorliegenden Ausführungen nicht nur
äußerst aufwendig in der Herstellung, sondern auch im gesamten Aufbau. *unwirtschaftlich* Außerdem sind derartige Einrichtungen räumlich relativ groß
und in den Anschaffungskosten relativ teuer.

Hier will die Erfindung Abhilfe schaffen. Die Erfindung, wie sie in
den Ansprüchen gekennzeichnet ist, löst die Aufgabe, Wärmetauscher,
deren Ausbildung und Anordnung in einer Einrichtung zur Wärmerückgewinnung durch Luftaustausch, insbesondere für Wohnhäuser und vergleichbare Anlagen, unter Verwendung insbesondere des Gegenstromverfahrens, zu schaffen, die in einem Zuluft-/Fortluftschacht mit einem räumlich relativ kleinen Querschnitt angeordnet, die beiden Luftmassenströme derart trennen, daß eine möglichst große Oberfläche den beiden benachbarten Luftmassenströmen entgegengesetzt wird, zur Erzielung eines möglichst großen Rückgewinnungsgrades. Dabei soll sichergestellt sein, daß ein oder mehrere derartiger Wärmetauscher in der schachtartigen Luftschleuse angeordnet werden können. Außerdem soll sichergestellt sein, daß die Luftschleusen insbesondere unter Verwendung genormter handelsüblicher Rohrelemente aufgebaut, mit Wärmetauschern bestückt und installiert werden können. Weiterhin ist es Aufgabe der Erfindung, daß derartige Wärmetauscher technisch einfach im Aufbau sowie rationell und wirtschaftlich mit einer möglichst großen Oberfläche im Vergleich zum räumlichen Querschnitt und der möglichen Luftdurchsatzmenge herstellbar sind.

Derartige Wärmetauscher können insbesondere einstückig insbesondere aus einem Blech oder einer Folie aus Kupfer oder einem anderen, ausreichend wärmeleitenden Werkstoff insbesondere mäanderartig gefalzt in selbsttragender oder an einem besonderen Geripppe oder Gerüst aufgehängt, hergestellt sein und entweder unmittelbar eine Montage- oder Installationswand durchdringend oder mittelbar von einem insbesondere handelsüblichen Kunststoffrohr geführt, eine Wand durchdringend, zum Luftaustausch der Innenluft = Fortluft, zur Außenluft = Zuluft bei gleichzeitiger Wärmerückgewinnung der, zur Zuluft in der Temperatur höheren, Fortluft installiert sein. Dabei können die Seitenwände der Luftschleusen für die Zuluft und die Fortluft insbesondere ausschließlich von den Seitenwänden eines speziell geformten Wärmetauschers gebildet sein. Es ist dort jedoch auch möglich, daß ein Teil der Seitenflächen durch ein sogenanntes Tragrohr aus Kunststoff gebildet sein kann, das außerdem Träger der ganzen Einrichtung sein kann.

In Weiterbildung der Erfindung ist es vorgesehen, daß dort unmittelbar im Bereich der Wärmetauscher, insbesondere in einem Tragrohr, installiert Ventilatoren vorgesehen sein können, undzwar für jede Luftschleuse ein Ventilator. Erforderlichenfalls können je Luftschleuse auch sogenannte Bypässe vorgesehen sein.

Desweiteren ist gemäß der Erfindung daran gedacht, daß die, in Richtung der Luftmassenströme verlaufenden, wärmeleitenden Flächenelemente derartiger Wärmetauscher sich in Richtung der Luftmassenströme pro Schleuse jeweils räumlich verengen, sodaß vor dem Luftaustritt aus der jeweiligen Schleuse ein sogenannter Rückstau- oder Turboeffekt in den jeweiligen Luftschleusen entsteht zur weiteren Verbesserung und Erhöhung des Wärmerückgewinnungsgrades.

Insbesondere derartige Wärmetauscher aus einem folienartigen Material ermöglichen durch die relativ große Flexibilität eines derartigen Materials den Aufbau auch relativ komplizierter Wärmetauscherformen mit einer größtmöglichen Oberfläche in rationeller und wirtschaftlicher Weise. Es ist dort auch daran gedacht, daß für bestimmte Anwendungsfälle die verwendeten Wärmetauscherwerkstoffe auch gewisse hygroskopische Eigenschaften aufweisen, insbesondere zur Entfeuchtung der Fortluft.

Die Gegenstände nach der Erfindung beschränken sich im weiteren nicht nur auf die beschriebenen Ausführungen derartiger Wärmetauscher aus Blech oder folienartigem Material, sondern es ist auch daran gedacht, derartige Wärmetauscher aus einem gezogenen Profilmaterial oder sogar aus einem pulverartigen Material herzustellen. Auch können derartige Wärmetauscher neben längs- oder koaxial verlaufenden Flächenelementen auch spiralförmig verlaufende Flächenelemente aufweisen,zur Trennung der beiden, einander gegenläufigen Luftmassenströmen, zum Zwecke des Wärmeaustauschs.

Ausführungsbeispiele des Erfindungsgegenstandes und vorteilhafte

– 4 –

Weiterbildungen sind in der Zeichnung dargestellt und werden im folgenden näher erläutert. Es zeigen

Figur 1 einen Querschnitt durch einen mäanderartig geformten Wärmetauscher in einem Vierkant-Rohr angeordnet,

Figur 2 einen Querschnitt durch einen mäanderartig geformten, seitlich mittelbar geführten Wärmetauscher, in einem Vierkant-Rohr angeordnet,

Figur 3 einen Querschnitt durch einen sägezahnartig geformten Wärmetauscher in einem Vierkant-Rohr angeordnet,

Figur 4 einen Querschnitt durch einen mäanderartig geformten Wärmetauscher in einem kreiszylindrischen Rohr angeordnet,

Figur 5 einen Querschnitt durch einen endlos gewellt geformten Wärmetauscher in einem kreiszylindrischen Rohr angeordnet,

Figur 6 einen Querschnitt durch einen mäanderartig geformten Hohlkörper-Wärmetauscher in einem Vierkant-Rohr angeordnet,

Figur 7 einen Querschnitt durch einen, von einem Drahtgerippe getragenen, aus einer Folie hergestellten, Wärmetauscher,

Figur 8 einen Querschnitt durch einen, auf zwei einander gegenüber liegenden Profilgitterhalbschalen geflochtenen, aus einer Folie hergestellten, Wärmetauscher,

Figur 9 einen Querschnitt durch einen, aus einzelnen Folienabschnitten zusammengeschweißten, oder geklebten Wärmetauscher,

Figur 10 einen Querschnitt durch einen, aus zwei gleichen Profilteilen hergestellten, Wärmetauscher,

Figur 11 einen Querschnitt durch einen, aus einem Sinterteil hergestellten, Wärmetauscher,

Figur 12 einen Längsschnitt durch einen spiralförmig geformten Wärmetauscher,

Figur 13 einen Längsschnitt mit einem dort angeordneten Wärmetauscher nach einer der vorangegangenen Figuren,

Figur 14 eine Ansicht auf eine Rohranordnung nach Figur 13 auf eine der Seiten mit einem Lufteintritts- bzw. Luftaustrittskanal,

Figur 15 einen Längsschnitt durch eine Rohranordnung mit einem der vorhergehenden Wärmetauscher mit zugeordneten Bypässen, mit zueinander parallel gerichteten Lufteintritts- bzw. Luftaustrittskanälen,

Figur 16 einen Längsschnitt durch eine Rohranordnung mit einem der vorherigen Wärmetauscher mit zugeordneten Bypässen und zueinander entgegengerichteten Lufteintritts- bzw. Luftaustrittskanälen und

Figur 17 einen Längsschnitt durch eine Ausführung mit, zum jeweiligen Luftaustritt hin, düsenartig gerichteten, Wärmetauscherflächen.

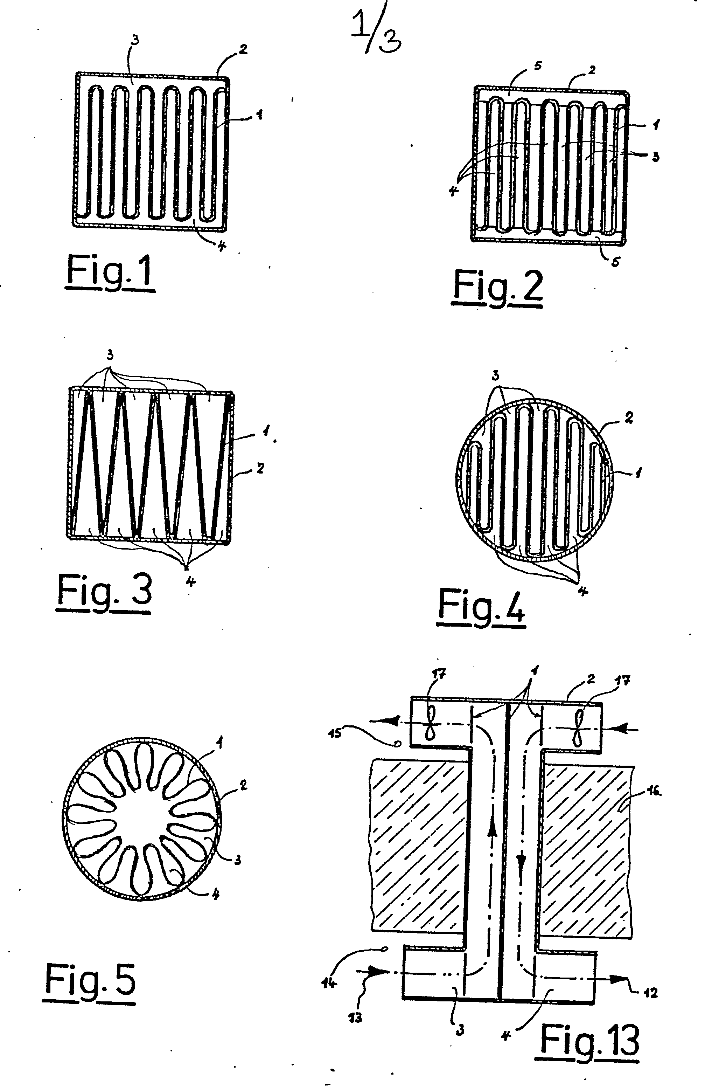

Die Figur 1 zeigt einen mäanderartig geformten Wärmetauscher 1 aus einem wärmeleitenden Blech z.B. aus einer Kupferlegierung der, koaxial verlaufend räumlich beliebig lang sein kann und derart in einem Rohr 2 angeordnet ist, daß dort der Rohrquerschnitt koaxial verlaufend insbesondere zweigeteilt wird, sodaß zwei, voneinander völlig getrennte, kammerartig koaxial verlaufende, Schleusen 3 und 4 gebildet werden. Dabei kann die Schleuse 3 für den Zuluft- und die Schleuse 4 für den Fortlufttransport vorgesehen sein. Den beiden einander entgegengerichtet verlaufenden Luftmassenströmen wird dort eine, zum jeweiligen Luftschleusenquerschnitt relativ große, Oberfläche des Wärmetauschers 1 benachbart. Das Rohr 2 kann nach außen hin wärmegedämmt, aus einem, den Normen entsprechenden, üblichen Kunststoffrohr bestehen. Es kann jedoch auch aus jedem anderen Werkstoff, wenn dies vorteilhaft sein sollte, hergestellt sein.

Ein derartiger Wärmetauscher 1 kann über die gezeichnete Ausführung hinaus jede beliebige Formgebung aufweisen. Wesentlich ist dort seine, die beiden Luftmassenströme großflächig trennende, Oberfläche. D.h. die beiden Luftmassenströme sollten dort idealerweise nur von den Flächen des Wärmetauschers geführt sein, um einen größtmöglichen Wärmerückgewinnungsgrad zu erzielen.

Nach einer Ausführung gemäß Figur 2 ist dort der Wärmetauscher 1 im Bereich der Umkehrradien des Mäanders von einem insbesondere schlecht wärmeleitenden oder wärmegedämmten, axial verlaufenden, Führungselement 15 seitlich begrenzt und geführt, sodaß die Luftmassenströme in den jeweiligen Schleusen 3 und 4 überwiegend nur noch von den Oberflächen bzw. Seitenflächen des Wärmetauschers 1 geführt sind. 2 zeigt das eigentliche Tragrohr der Einrichtung.

Die Figur 3 zeigt einen sägezahnartig geformten Wärmetauscher 1 in einem Rohr 2, wo wiederum die beiden kammerartig längs verlaufenden Schleusen 3 und 4 zur Führung der beiden Luftmassenströme durch den Wärmetauscher 1 zueinander geteilt sind.

Die Figur 4 zeigt eine Formgebung eines Wärmetauschers 1, insbesondere nach Art eines Mäanders, zur Anordnung in einem Rohr 2, das einen kreisförmigen Querschnitt aufweist. Bei der vorliegenden Formgebung und Anordnung des Wärmetauschers 1 im Rohr 2 wird eine besonders großflächige Ausführung des Wärmetauschers 1 zur restlichen Innenfläche des Rohres 2 erzielt. 3 und 4 zeigen wiederum die beiden koaxial verlaufenden kammerartigen Schleusen zur Führung der beiden Luftmassenströme.

In der Figur 5 ist der Wärmetauscher 1 aus einem radial verlaufend gewellten, insbesondere endlos hergestellten, zum Rohr 2 koaxial verlaufenden, Blechteil hergestellt. 3 und 4 bedeuten dort wiederum die beiden koaxial verlaufenden Schleusen zur Führung der einander entgegengesetzt gerichteten Luftmassenströme.

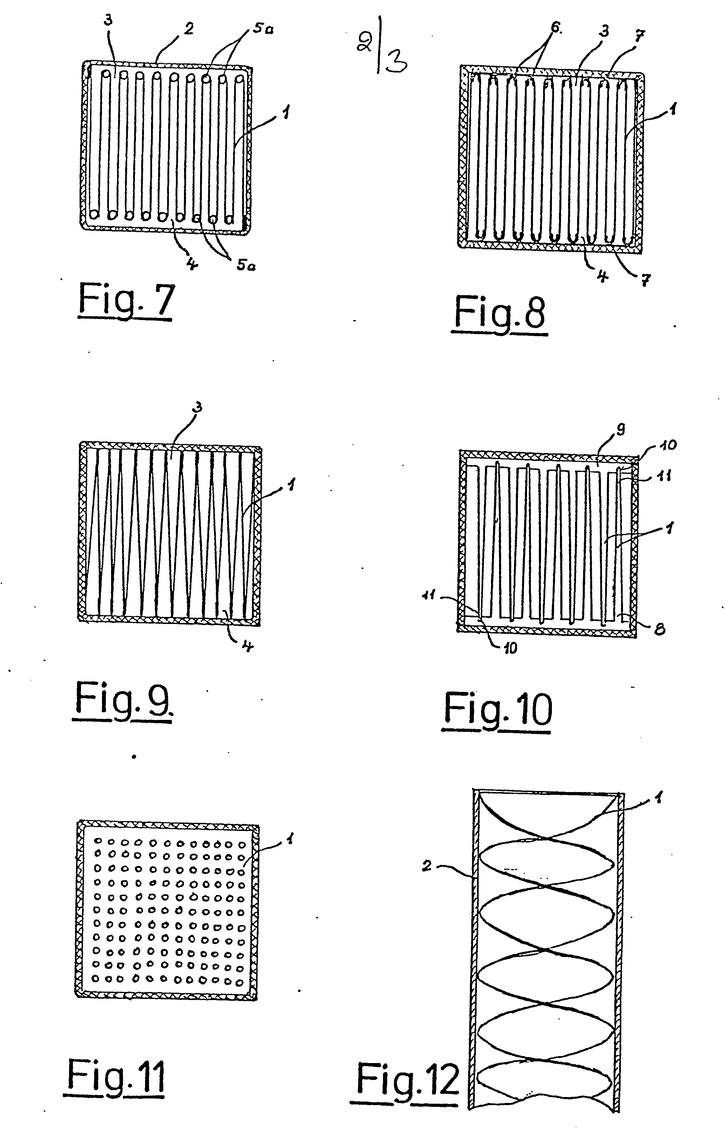

Nach der Figur 6 kann ein Wärmetauscher 1 auch aus einem Hohlkörper gebildet sein, in dessen Inneren ein Medium, insbesondere in flüssiger Form, die zurückgewinnbare Wärme ganz oder teilweise, insbesondere steuerbar, abführen kann. Dieses Medium kann insbe- Bestandteil eines Flüssigkeits- oder Gaskreislaufs einer Wärmepumpe sein, d.h. es kann ein Kühlmittel sein. Hierdurch ist es möglich, den Wärmerückgewinnungsgrad gegebenenfalls wesentlich zu steigern bzw. zu steuern.

In der Figur 7 ist ein Wärmetauscher 1 gezeigt, der aus folienartigem Material besteht, das um koaxial zueinander verlaufende Drähte oder rohrartige Hülsen 5a mäanderartig geflochten ist, wobei die beiden Enden der Wärmetauscher-Folie jeweils an einem, den gesamten Wärmetauscher 1 rohrartig umschließenden, Mantel 2 befestigt sind, sodaß wiederum zwei völlig voneinander getrennte, kammerartige, koaxial verlaufende Schleusen 3 und 4 gebildet werden. Die Folie, aus der das eigentliche Element des Wärmetauschers 1 besteht, kann aus einem relativ dünnwandigen Metallband jedes beliebigen Werkstoffs oder erforderlichenfalls auch aus einem Kunststoffbandmaterial hergestellt sein, zumal bei den vorgesehenen Folienstärken die Wärmeübergangszahl nur noch vernachlässigbar gering von Einfluß ist, und der Wirkungsgrad außerordentlich hoch ist.

- 8 -

Erforderlichenfalls und bei einer Anzahl Anwendungsfälle derartiger Wärmetauschereinrichtungen erwünscht, kann dort der Folienwerkstoff feuchtigkeitsdurchlässig sein, um entweder aus der Zuluft Feuchtigkeit zu absorbieren und über die Abluft gleich wieder
abzuführen, oder die Feuchtigkeit der Abluft in bestimmten Mengen
der Zuluft wieder beizumengen. Es ist jedoch auch vorgesehen, daß
die Wärmetauscher-Folie derart feuchtigkeitsabsorbierend ist, daß
über die Folie Feuchtigkeit mittelbar oder unmittelbar direkt abgeführt werden kann und dort nur die sensible Wärme übergeben wird.
Der Mantel 2 kann aus einem Rohr oder einer sonstigen Einrichtung bestehen und erforderlichenfalls jeden beliebigen Querschnitt
und jeden beliebigen Durchmesser aufweisen.

In einer Ausführung nach der Figur 8 besteht das tragende Gerippe
für den Wärmetauscher 1 aus zwei, einander spiegelbildlich gegenüber liegend angeordneten, Profilgitterhalbschalen, durch deren
Speichen 6 die Folie des Wärmetauschers 1 geflochten ist. Dabei
haben die Speichen 6 dieselbe fixierende und tragende Aufgabe, wie
dies die Hülsen 5a in der Ausführung nach der Figur 7 haben. Diese
Ausführung eines kompletten Wärmetauschers ist wirtschaftlich relativ zweckmäßig, zumal mit einer weiteren Folie um den äußeren
Umfang herum die Einrichtung geschlossen werden kann, sodaß wiederum die beiden erwünschten, die Luftmassenströme führenden, Schleusen 3 und 4 gebildet werden. Die Profilgitterhalbschalen 7 können
zweckmäßigerweise aus einem Kunststoff hergestellt sein.

Die Figur 9 zeigt einen Wärmetauscher 1, der aus einzelnen folien-
oder blechartigen Abschnitten besteht, die an den Längsseiten zusammengeschweißt oder zusammengeklebt sind zur Bildung eines entsprechenden Wärmetauscherelementes, daß in ein entsprechendes, vorzugsweise rohrartiges Gehäuse eingebaut ist. Es kann dort natürlich
auch jede andere Gehäuseform zur Anwendung kommen, zur Bildung
der beiden Schleusen 3 und 4 für die Zu- und Abluft.

In der Figur 10 ist ein Wärmetauscher 1 aus zwei gleichen Profilteilen 8, 9 gebildet, die einander spiegelbildlich gegenüber stehen und um eine halbe Stegteilung zueinander versetzt sind. Derartige Profilteile 8, 9 können stranggepreßt, oder gegossen, oder gespritzt aus einem metallischen Werkstoff oder aus einem Kunststoff hergestellt sein. Sie sind für den unmittelbaren Eingriff miteinander mit entsprechenden Nuten 10 versehen, in die die Stege 11 beim Zusammensetzen eingreifen.

Die Figur 11 zeigt einen, im Sinterverfahren hergestellten, Wärmetauscher 1. Ein derartiger Wärmetauscher 1 kann isnbesondere aus einem technischen Keramikwerkstoff bestehen und mit einer Vielzahl, koaxial verlaufender, Bohrungen ausgestattet sein, die in zwei oder erforderlichenfalls in mehrere Schleusen aufgeteilt sind zur Führung der wärmetauschenden Medien. Ein derartiger Keramikkörper als Wärmetauscher 1 kann einstückig hergestellt sein.

Eine weitere zweckmäßige Ausbildungsform eines Wärmetauschers 1 zeigt die Figur 12. Dort besteht der eigentliche Körper des Wärmetauschers 1 aus einem spiralförmig geformten Blechteil, das insbesondere koaxial verlaufend in einem gehäuseartigen Rohr 2 angeordnet ist. Diese vorteilhafte Ausführung eines Wärmetauschers kann insbesondere für Rohrkonstruktionen nützlich sein, wo es auf einen relativ kleinen Außendurchmesser bei unwesentlicher räumlicher Länge im besonderen ankommt.

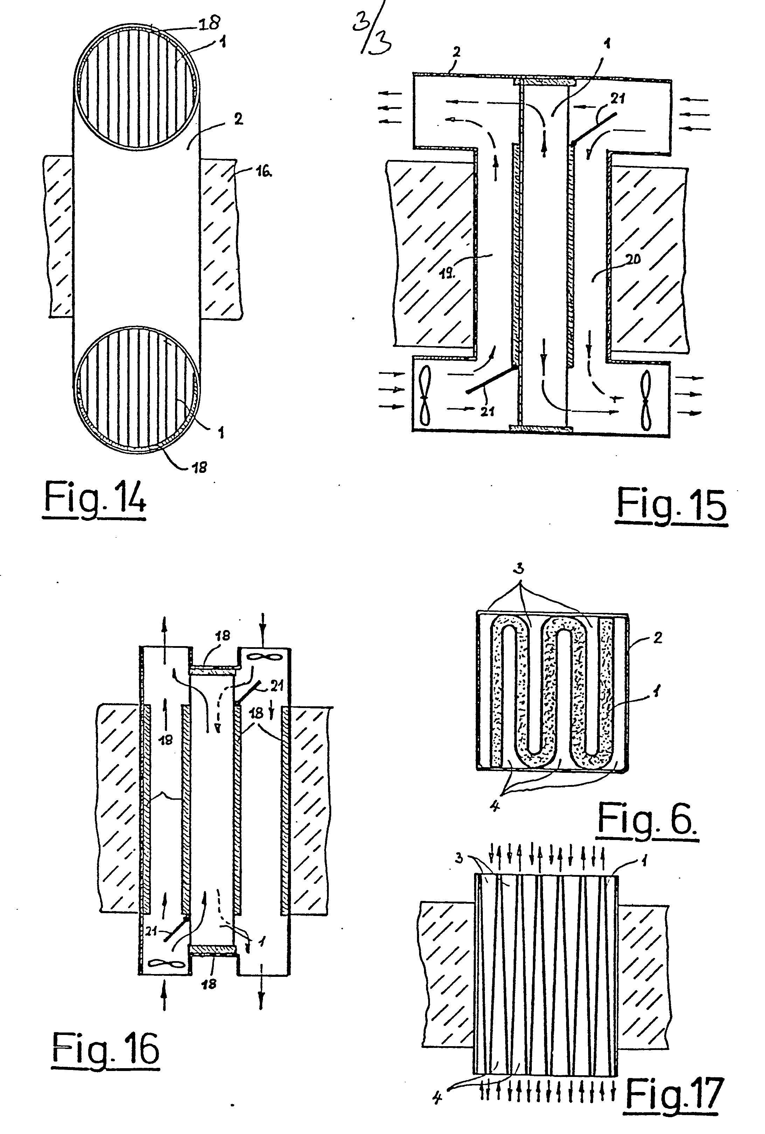

Die, in den vorstehenden Figuren beschriebenen, Wärmetauscher 1 können relativ einfach insbesondere in einem Rohrsystem angeordnet werden, wie die Figur 13 zeigt. Dort ist sichtbar, wie der Wärmetauscher 1 in einer der zuvor beschriebenen Formgebungen koaxial verlaufend in einem Rohr 2 angeordnet sein kann, derart, daß zwei kammerartige, koaxial zueinander verlaufende, Schleusen 3 und 4 gebildet werden, die hermetisch voneinander getrennt, zur Führung der beiden Luftmassenströmen, des Fortluftstromes 12 und des Zuluftstromes 13, wenn 14 den Außenluftbereich und 15 den Innenluftbereich kennzeichnen, sowie 16 eine, die beiden Luftbereiche trennende, Mauer, insbesondere eines Wohnhauses oder einer vergleichbaren Anlage bezeichnet. Dort soll die, zur Aussenluft in der Temperatur relativ höhere, Innenluft ausgetauscht werden, wobei ein möglichst großer Teil der, in der Innenluft steckenden, Wärmeenergie unmittelbar über dem Wärmetauscher 1 zurückgewonnen, indem die, aus dem Außenluftbereich 14 zugeführte, Zuluft erwärmt werden soll.

Die Ausbildung und Anordnung des Rohres 2 kann dort derart ausgeführt sein, daß dieses aus üblichen, den Normen entsprechenden, Kunststoffrohren hergestellt und zueinander zusammengefügt sind. Dabei kann dem, die Wand 16 durchdringenden, geraden Rohrstück endseitig jeweils ein T-Stück zugeordnet sein. Diese Anordnung mit dem dort vorgesehenen Wärmetauscher 1 führt die beiden Luftmassenströme parallel, einander entgegengerichtet verlaufend, wobei eine Beeinflussung der jeweiligen Eintritts- bzw. Austrittsöffnungen des Rohres 2, die räumlich voneinander abgekehrt sind, vermieden wird. Zur Förderung und erforderlichenfalls Regulierung der jeweiligen Luftmassenströme kann je Schleuse ein Ventilator 17, der erforderlichenfalls regelbar ist, vorgesehen sein.

In der Figur 14 ist sichtbar, wie der Wärmetauscher 1 im Rohr 2 bzw. an den Wandungen der endigen T-Stücke mit seinen Stirnseiten anliegt und hermetisch abgedichtet sein kann. 18 bezeichnet dort stirnseitig am Wärmetauscher 1 vorgesehene Dichtmanschetten, die an der Innenwandung der T-Stücke anliegen. 16 bezeichnet die trennende Wand.

Die Einrichtung gemäß Figur 13 kann gemäß Figur 15 mit, zu den Luftschleusen beidseitig des Wärmetauschers 1 koaxial verlaufenden, weiteren Luftschleusen 19 und 20, sogenannten Bypässen, versehen sein, die insbesondere über spezielle Steuerklappen 21 stufenlos regelbar,zu- bzw. abgeschaltet werden können.

Eine weitere Ausbildung und Einrichtung zur Wärmerückgewinnung zeigt die Figur 16. Der Unterschied zur Figur 15 besteht darin, daß die Figur 15 eine H-förmige Anordnung des Rohres 2 zeigt mit einem parallel bzw. entgegengerichtet verlaufenden Luftaustritt bzw. -eintritt im Gegensatz zur Figur 16, wo die Luftaustritts- bzw. Lufteintrittskanäle parallel zueinander verlaufen und geradlinig in sogenannte Bypässe münden, die den Wärmetauscher 1 dazwischenliegend begrenzen. Dabei bedeutet 18 wiederum Dichtmanschetten zwischen Wärmetauscher 1 und den Innenwandungen bzw. Bypasswandungen des Rohres 2. 21 bezeichnet Steuerklappen zwischen den Lufteintritts- bzw. -austrittsschleusen des Wärmetauschers 1 und der Bypässe.

Eine weitere Verbesserung des Wärmerückgewinnungsgrades ist nach einer Ausführung gemäß Figur 17 möglich, wo der Wärmetauscher 1 derart ausgebildet ist, daß an der jeweiligen, einander entgegengesetzten, Austrittsstelle der Schleusen 3 und 4 diese Schleusen sich dort düsenartig verengen, sodaß ein sogenannter Rückstau- oder Turboeffekt entsteht.

Es liegt im Rahmen der Erfindung, daß derartige Wärmetauscher 1 unmittelbar in entsprechende Geräte, Einrichtungen oder an Häusern in die Wände eingesetzt werden können, sofern dort dafür gesorgt wird, daß dort die beiden Schleusen 3 und 4, die durch den Wärmetauscher 1 gebildet und voneinander getrennt sind, zueinander abgedichtet sind, sodaß beide Luftmassenströme völlig voneinander getrennt geführt sind.

Im übrigen kann es vorgesehen sein, daß erforderlichenfalls auch mehr als zwei Luftschleusen von einem der vorliegenden und beschriebenen Wärmetauscher 1 zueinander abgetrennt werden und daß dort der Wärmeübergang der einzelnen Medien zueinander, die in den jeweiligen Schleusen geführt werden, steuerbar ist.

Patentansprüche

1. Wärmetauscher (1) mit festen Austauschflächen zur Übertragung sensibler Wärme, sowie deren Ausbildung und Anordnung in Einrichtungen mit einer Zuluftschleuse (3) und einer Fortluftschleuse (4), zwischen denen solche Wärmetauscher (1) angeordnet sind, zur größtmöglichen Wärmerückgewinnung der, zur Zuluft (13) in der Temperatur höheren und in entgegengesetzter Richtung strömenden, Fortluft (12), insbesondere für den Einsatz in Wohnhäusern und vergleichbaren Anlagen, dadurch gekennzeichnet, daß die Wärmetauscher (1) aus einer Vielzahl einander benachbarter und in Richtung der Luftmassenströme verlaufender, wärmeleitender Flächenelemente gebildet sind, die dort in den Luftmassenströmen trennwandartig angeordnet und luftdicht sowie wärmeleitend miteinander verbunden sind, sodaß zwei, mindestens von den Flächen eines Wärmetauschers (1) gebildete, voneinander getrennte, schachtartige Zuluftschleusen (3) und Fortluftschleusen (4) geschaffen sind.

2. Wärmetauscher (1) nach Patentanspruch 1, dadurch gekennzeichnet, daß diese aus Blechen, Folien, Profilteilen, Spritzteilen oder Sinterteilen geformt sind, und daß diese Formteile aus metallischen oder keramischen Werkstoffen oder aus einem Kunststoff hergestellt sind.

3. Wärmetauscher (1) nach Patentanspruch 1 und 2, dadurch gekennzeichnet, daß diese mäanderartig, oder sägezahnartig oder spiralartig, endlich oder endlos geformt sind und einzeln in einem gehäuseartigen Rohr (2) eingebaut sind.

4. Wärmetauscher (1) nach Patentanspruch 1 bis 3, dadurch gekennzeichnet, daß diese zweiwandig, im Innern einen Hohlraum bildend, zur Aufnahme und Führung insbesondere eines flüssigen oder gasförmigen Mediums für den Energietransport und/oder die Energieübertragung, hergestellt sind.

5. Wärmetauscher (1) nach Patentanspruch 1 bis 4, dadurch gekennzeichnet, daß diese, in Richtung der Luftmassenströme verlaufend, zur jeweiligen, einander gegenüber liegenden Austrittsstelle hin, die Luftschleusen (3 und 4) düsenartig verengen, zur Erzielung eines sogenannten Turboeffektes in den Luftschleusen (3 und 4).

6. Wärmetauscher (1) nach Patentanspruch 1 bis 5, dadurch gekennzeichnet, daß zu den beiden Luftschleusen (3 und 4) zusätzliche Luftschleusen (19, 20), sogenannte Bypässe, vorgesehen sind, und daß die Luftschleusen (3 und 4) mit den zusätzlichen Luftschleusen (19, 20) über Steuerklappen (21) stufenlos regelbar, zu- bzw. abschaltbar sind.

7. Wärmetauscher (1) nach Patentanspruch 1 bis 6, dadurch gekennzeichnet, daß die Luftschleusen (3 und 4) und/oder (19 und 20) jeweils einzeln oder zusammen mit Ventilatoren (17) zum Transport der Luftmassen ausgestattet sind.

8. Wärmetauscher (1) nach Patentanspruch 1 bis 7, dadurch gekennzeichnet, daß diese im bestimmten Maße feuchtigkeitsdurchlässig oder feuchtigkeitsabsorbierend ausgeführt sind.

9. Wärmetauscher (1) nach Patentanspruch 1 bis 8, dadurch gekennzeichnet, daß diese in ein Rohr (2) als tragendes Gehäuse eingebaut sind, und daß das Rohr (2) mit T-förmigen Rohrabschlüssen versehen ist derart, daß die beiden in der Temperatur zueinander verschiedenen Luftmassenströme, des Fortluftstromes (12) und des Zuluftstromes (13), räumlich voneinander abgekehrt sind.

10. Wärmetauscher (1) nach Patentanspruch 1 bis 9, dadurch gekennzeichnet, daß diese zu den Wandungen des gehäuseartigen Rohres (2) mittels Dichtmanschetten (18) abgedichtet sind.

1/3

Fig.1

Fig. 2

Fig. 3

Fig.4

Fig.5

Fig.13

# Fig. 7

# Fig. 8

# Fig. 9

# Fig. 10

# Fig. 11

# Fig. 12

Fig. 14

Fig. 15

Fig. 16

Fig. 6.

Fig. 17